(19) Europäisches Patentamt / European Patent Office / Office européen des brevets

(11) **EP 3 425 987 A1**

(12) **EUROPEAN PATENT APPLICATION**
published in accordance with Art. 153(4) EPC

(43) Date of publication:
**09.01.2019  Bulletin 2019/02**

(51) Int Cl.:
***H04W 72/12*** (2009.01)

(21) Application number: **16895971.6**

(22) Date of filing: **31.03.2016**

(86) International application number:
**PCT/CN2016/078045**

(87) International publication number:
**WO 2017/166191 (05.10.2017 Gazette 2017/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Huawei Technologies Co., Ltd.
Longgang District
Shenzhen, Guangdong 518129 (CN)**

(72) Inventors:
• **ZHANG, Xingwei
Shenzhen
Guangdong 518129 (CN)**

• **LI, Chao
Shenzhen
Guangdong 518129 (CN)**
• **LIU, Zhe
Shenzhen
Guangdong 518129 (CN)**
• **SHI, Jie
Shenzhen
Guangdong 518129 (CN)**
• **SUN, Yinghua
Shenzhen
Guangdong 518129 (CN)**

(74) Representative: **Thun, Clemens
Mitscherlich PartmbB
Patent- und Rechtsanwälte
Sonnenstraße 33
80331 München (DE)**

(54) **SIGNAL PROCESSING METHOD AND NETWORK DEVICE**

(57)    Embodiments of the present invention disclose a signal processing method and a network device, so as to number a transmission time interval TTI in a frame structure and generate a signal sequence by using a number of the TTI. The method in the embodiments of the present invention includes: determining a number of a transmission time interval TTI in a frame structure, where the TTI includes a time length less than 1 millisecond; and generating a signal sequence of the TTI based on the number of the TTI. The number of the TTI less than 1 millisecond or equal to 1 millisecond in the frame structure is determined, and the signal sequence of the TTI is generated based on the number of the TTI. This prevents interference between adjacent or neighboring TTIs or intersymbol interference (English: Inter symbol Interference, ISI for short) from being generated due to generation and use of a same signal sequence because for all short TTIs, a signal sequence is generated by using a corresponding subframe number or corresponding timeslot numbers.

101. Determine a number of a TTI in a subframe structure

↓

102. Generate a signal sequence of the TTI

↓

103. Send the signal sequence

FIG. 1

**Description**

**TECHNICAL FIELD**

The present invention relates to the communications field, and in particular, to a signal processing method and a network device.

**BACKGROUND**

In current LTE technologies, one radio frame has a length of 10 milliseconds and includes 10 subframes each having a length of 1 millisecond. One subframe may be divided into two timeslots, and one timeslot may include six symbols or seven symbols. In other words, one subframe includes 12 symbols or 14 symbols.

Numbers of 10 subframes in one radio frame may be 0 to 9, or the radio frame may be represented by using numbers of timeslots in the subframes, and the numbers of the timeslots may be 0 to 19. In the prior art, a transmission time interval TTI of data in LTE is 1 millisecond, that is, a length of one subframe. A corresponding signal sequence generated by using a subframe number or timeslot numbers corresponding to the TTI is used as a signal sequence of the TTI.

In the LTE Release 14, to support small-packet services and low-delay services, a short TTI technology is introduced. To be specific, one TTI may occupy 1 millisecond in length, or may occupy only 0.5 milliseconds or even several symbols in length. Because a length of the TTI becomes shorter, a delay is correspondingly reduced, and resource utilization is improved in small-packet transmission.

If the prior art in which the corresponding signal sequence generated by using the subframe number or timeslot numbers corresponding to the TTI is used as the signal sequence of the TTI is still used, a same signal sequence is generated and used, resulting in a problem that interference or intersymbol interference (English: Inter Symbol Interference, ISI for short) is generated between adjacent or neighboring TTIs. Because a radio signal passes through a plurality of paths during propagation, different time is consumed when the radio signal is sent to a receiver by using different paths. In this case, a problem of delay spread caused by multipath overlapping can be resolved by using a cyclic prefix (English: Cyclic Prefix, CP for short). However, if a delay exceeds a time length of the CP, interference to adjacent symbols may be generated. In this case, time division is not available, and only orthogonal sequence code division can be used to avoid interference. This can be more serious in uplink. To ensure that uplink signals sent by terminals at different distances away from a base station arrive at the base station at a same time, the terminals need to send the signals in advance. There are different timing advances for different terminals, and a timing advance may result in a fuzzy symbol boundary or even a fuzzy subframe boundary.

SUMMARY

Embodiments of the present invention provide a signal processing method and a network device, so as to number a transmission time interval TTI in a frame structure and generate a signal sequence by using a number of the TTI.

In view of this, a first aspect of this application provides a signal processing method, and the method includes: determining a number of a transmission time interval TTI in a frame structure, where the TTI includes a time length less than 1 millisecond; generating a signal sequence of the TTI based on the number of the TTI; and sending the signal sequence or sending information carrying the signal sequence.

In an embodiment of the present invention, a TTI has only one length of 1 millisecond originally but may have a plurality of lengths currently. When a length of the TTI is less than 1 millisecond, the TTI may be referred to as a short TTI. In a radio frame/subframe, a short TTI with only one length may be included; a combination of a short TTI and a 1-millisecond TTI may be included; or a combination of short TTIs with a plurality of lengths may be included.

In this embodiment of the present invention, to avoid interference between adjacent or neighboring TTIs or intersymbol interference, each TTI in one radio frame may be independently numbered, or a TTI in only one subframe may be independently numbered, or even a TTI in only one timeslot may be independently numbered, provided that the generated signal sequence does not cause interference between the TTIs or intersymbol interference. This is not limited herein.

An original number of a timeslot is set to $n_s$, and based on a cell number, a temporary ID (RNTI), and a TTI number that are used by a network device in LTE, scrambling sequences of a PUSCH, a PUCCH, a PCFICH/PHICH, a PDCCH, a PDSCH, and a PMCH channel may be generated, and different reference signal sequences such as a CRS sequence, an MBSFN RS sequence, a DL DMRS sequence, a PRS sequence, and a CSI-RS sequence may be generated.

The foregoing formulas are used to obtain initial values of the scrambling sequences or the reference signal sequences. The present invention does not exclude subsequent processing performed based on the initial values, such as performing cyclic shift and using an orthogonal cover code.

In some feasible embodiments, an existing formula may remain unchanged, and a subframe number in the formula is simply replaced by a TTI number $n_T$, so as to generate a scrambling sequence or a reference signal sequence. Alternatively, an existing formula may remain unchanged, and a subframe number in the formula is replaced by LSB($n_T$, 4), millisecond B($n_T$, 4), or ($n_T$) mod 16, so as to generate a scrambling sequence or a reference signal sequence, where $n_s$ is a TTI number, and 4 is a quantity of bits occupied by the subframe number in the formula.

It should be noted that generation of the signal sequence by using the TTI number is not limited to the foregoing schemes, provided that a signal sequence that does not cause interference between the adjacent or neighboring TTIs or intersymbol interference can be generated. This is not limited herein.

In some feasible embodiments, optionally, after the signal sequence is determined, the determined signal sequence may be sent to a recipient network device. In this embodiment of the present invention, the signal sequence may be sent by a base station or a terminal, and the recipient network device may be a base station or a terminal, provided that the base station or the terminal is a network device that can receive and send a signal. This is not limited herein.

The number of the TTI less than 1 millisecond or equal to 1 millisecond in the frame structure is determined, and the signal sequence of the TTI is generated based on the number of the TTI. This prevents interference between adjacent or neighboring TTIs or intersymbol interference (English: Inter symbol Interference, ISI for short) from being generated due to generation and use of a same signal sequence because for all short TTIs, a signal sequence is generated by using a corresponding subframe number or corresponding timeslot numbers.

With reference to the first aspect of this application, in a first implementation of the first aspect of this application, the method includes:

sequencing TTIs in the frame structure, and using a sequence number of the TTI as the number of the TTI.

In some feasible embodiments, the TTIs in the frame structure may be directly sequenced one by one. A sequencing method may be performed starting from 0, and sequence numbers are sequenced in ascending order of natural numbers; or the sequencing method may be performed starting from 1. This is not limited herein. It should be noted that sequencing described herein means that sequencing is performed according to a specific rule, and each TTI has a corresponding sequence number.

The TTIs are directly sequenced and numbered. Therefore, no vacancy sequence number is generated. In this way, resources are better utilized, and no resource is wasted.

With reference to the first aspect of this application, in a second implementation of the first aspect of this application, the method includes:

determining a number or numbers, in the frame structure, of one or more symbols occupied by the TTI, and using one of the number or numbers of the one or more symbols as the number of the TTI according to a preset rule.

A symbol in the frame structure has been pre-numbered, and each symbol has a definite symbol in the frame structure. In this embodiment of the present invention, symbols occupied by each TTI are first determined; and then numbers of these symbols are determined, and one of the numbers is selected as the number of the TTI. For example, one radio frame has 140 symbols, and numbers of the symbols of the radio frame are 0 to 139. If the TTI occupies 4 symbols, numbers of the occupied symbols may be 0 to 3.

In this embodiment of the present invention, after the numbers occupied by the TTI are determined, one number is selected as the number of the TTI according to the preset rule. In some feasible embodiments, the preset rule may be to select a largest or smallest number from numbers of a plurality of symbols or may be another rule, provided that the preset rule is a rule by which both the recipient network device and a sender network device abide. This is not limited herein.

The existing numbers of the symbols are used to number the TTI. Therefore, an operation process of a device is avoided, and a relationship between the TTI and the symbols can be learned.

With reference to the first aspect of this application, in a third implementation of the first aspect of this application, the method includes:

sequencing parts of the frame structure, where a length of each part of the frame structure is a length of a shortest TTI in the frame structure, and the parts of the frame structure are divided in a time order; and using, according to a preset rule, one of a sequence number or sequence numbers of one or more parts occupied by the TTI as the number of the TTI.

In some feasible embodiments, different TTIs have different lengths in the frame structure. In this embodiment of the present invention, a TTI with a shortest length may be selected from the TTIs in the frame structure and may be used as a counting unit for dividing the frame structure in the time order. If one radio frame has 140 symbols, and a shortest TTI has two symbols, the radio frame may be divided into 70 parts in total with each having a length of two symbols, regardless of lengths of other TTIs. Each part includes two adjacent symbols, and every two parts are adjacent to each other.

In some feasible embodiments, the TTI in the frame structure occupies one or more parts, or may occupy a part of some parts. For example, the shortest TTI has two symbols, and the TTI occupies the second symbol of a part A and the first symbol of a part B that is after and adjacent to the part A. In this case, a number of the earlier-ranked part may be used as the number of the TTI according to the preset rule. In other feasible embodiments, the later-ranked part may alternatively be used as the number of the TTI, or another rule may be available, provided that the preset rule is a protocol by which both the recipient network device and the sender network device abide. This is not limited herein.

The shortest TTI is used as the counting unit for sequencing and numbering. Therefore, compared with a numbering method based on a single symbol, this reduces a quantity of numbers, saves space, and simplifies the numbering method.

With reference to the first aspect of this application, in a fourth implementation of the first aspect of this application, the method includes:

determining a number of the TTI in a subframe; and determining a number of the TTI in a radio frame, where the number of the TTI is formed by a number of the subframe in the radio frame and the number of the TTI in the subframe.

In some feasible embodiments, when the frame structure is specifically the radio frame, a two-level numbering method may alternatively be used to number the TTI in the frame structure, where a first-level number is the number of the subframe, and a second-level number is the number of the TTI in the subframe. The determined number of the TTI in the subframe may be used as the second-level number.

In this embodiment of the present invention, the first-level number is the subframe number corresponding to the TTI, and the number may be represented as a timeslot number. After the first-level number and the second-level number of the TTI are determined, the number of the TTI may be formed by the first-level number and the second-level number.

The number of the subframe and the number of the TTI in the subframe are used. Therefore, the subframe corresponding to the TTI can be learned from the number, and during calculation, the first-level number or the second-level number may be freely selected, or both the first-level number and the second-level number may be selected, so that there is higher freedom during calculation, and data can be selected based on different requirements.

A second aspect of this application provides a network device, and the network device includes:

a determining module, configured to determine a number of a transmission time interval TTI in a frame structure, where the TTI includes a time length less than 1 millisecond; a generation module, configured to generate a signal sequence of the TTI based on the number of the TTI that is determined by the determining module; and a sending module, configured to send the signal sequence or send information carrying the signal sequence.

With reference to the second aspect of this application, the determining module is specifically configured to: sequence TTIs in the frame structure, and use a sequence number of the TTI as the number of the TTI.

With reference to the second aspect of this application, the determining module is specifically configured to: determine a number or numbers, in the frame structure, of one or more symbols occupied by the TTI, and use one of the number or numbers of the one or more symbols as the number of the TTI according to a preset rule.

With reference to the second aspect of this application, the determining module is specifically configured to: sequence parts of the frame structure, where a length of each part of the frame structure is a length of a shortest TTI in the frame structure, and the parts of the frame structure are divided in a time order; and use, according to a preset rule, one of a sequence number or sequence numbers of one or more parts occupied by the TTI as the number of the TTI.

With reference to the second aspect of this application, the determining module is specifically configured to: determine a number of the TTI in a subframe; and determine a number of the TTI in a radio frame, where the number of the TTI is formed by a number of the subframe in the radio frame and the number of the TTI in the subframe.

A third aspect of this application provides a network device, including:

a memory and a processor, where the memory is connected to the processor; the processor is configured to: determine a number of a transmission time interval TTI in a frame structure, where the TTI includes a time length less than 1 millisecond; and generate a signal sequence of the TTI based on the number of the TTI; and the memory is configured to store a program, the number of the TTI that is determined by the processor, and the signal sequence of the TTI.

A fourth aspect of this application provides a signal processing method, and the method includes:

determining a number of a transmission time interval TTI in a frame structure, where the TTI includes a time length less than 1 millisecond; and receiving a signal sequence of the TTI based on the number of the TTI.

With reference to the fourth aspect of this application, in a first implementation of the fourth aspect of this application, the method includes:

sequencing TTIs in the frame structure, and using a sequence number of the TTI as the number of the TTI.

With reference to the fourth aspect of this application, in a second implementation of the fourth aspect of this application, the method includes:

determining a number or numbers, in the frame structure, of one or more symbols occupied by the TTI, and using one of the number or numbers of the one or more symbols as the number of the TTI according to a preset rule.

With reference to the fourth aspect of this application, in a third implementation of the fourth aspect of this application, the method includes:

sequencing parts of the frame structure, where a length of each part of the frame structure is a length of a shortest TTI in the frame structure, and the parts of the frame structure are divided in a time order; and using, according to a preset rule, one of a sequence number or sequence numbers of one or more parts occupied by the TTI as the number of the TTI.

With reference to the fourth aspect of this application, in a fourth implementation of the fourth aspect of this application, the method includes:

determining a number of the TTI in a subframe; and determining a number of the TTI in a radio frame, where the number of the TTI is formed by a number of the subframe in the radio frame and the number of the TTI in the subframe.

A fifth aspect of this application provides a network device, and the method includes:

a determining module, configured to determine a number of a transmission time interval TTI in a frame structure, where the TTI includes a time length less than 1 millisecond; and a receiving module, configured to receive a signal sequence of the TTI based on the number of the TTI that is determined by the determining module.

With reference to the fifth aspect of this application, the determining module is specifically configured to:

sequence TTIs in the frame structure, and use a sequence number of the TTI as the number of the TTI.

With reference to the fifth aspect of this application, in a second implementation of the fifth aspect of this application, the determining module is specifically configured to:

determine a number or numbers, in the frame structure, of one or more symbols occupied by the TTI, and use one of the number or numbers of the one or more symbols as the number of the TTI according to a preset rule.

With reference to the fifth aspect of this application, the determining module is specifically configured to:

sequence parts of the frame structure, where a length of each part of the frame structure is a length of a shortest TTI in the frame structure, and the parts of the frame structure are divided in a time order; and use, according to a preset rule, one of a sequence number or sequence numbers of one or more parts occupied by the TTI as the number of the TTI.

With reference to the fifth aspect of this application, the determining module is specifically configured to:

determine a number of the TTI in a subframe; and determine a number of the TTI in a radio frame, where the number of the TTI is formed by a number of the subframe in the radio frame and the number of the TTI in the subframe.

A sixth aspect of this application provides a network device, including:

a memory and a processor, where the memory is connected to the processor; the processor is configured to: determine a number of a transmission time interval TTI in a frame structure, where the TTI includes a time length less than 1 millisecond; and receive a signal sequence of the TTI based on the number of the TTI.

The memory is configured to store a program, the number of the TTI that is determined by the processor, and the signal sequence of the TTI.

It can be learned from the foregoing technical solutions that the embodiments of the present invention have the following advantages:

The number of the TTI less than 1 millisecond or equal to 1 millisecond in the frame structure is determined, and the signal sequence of the TTI is generated based on the number of the TTI. This prevents interference between adjacent or neighboring TTIs or intersymbol interference (English: Inter symbol Interference, ISI for short) from being generated due to generation and use of a same signal sequence because for all short TTIs, a signal sequence is generated by using a corresponding subframe number or corresponding timeslot numbers.

**BRIEF DESCRIPTION OF DRAWINGS**

FIG. 1 is a schematic diagram of an embodiment of a signal processing method according to an embodiment of the present invention;

FIG. 2 is a schematic diagram of another embodiment of a signal processing method according to an embodiment of the present invention;

FIG. 3 is a schematic diagram of another embodiment of a signal processing method according to an embodiment of the present invention;

FIG. 4 is a schematic diagram of another embodiment of a signal processing method according to an embodiment of the present invention;

FIG. 5 is a schematic diagram of another embodiment of a signal processing method according to an embodiment of the present invention;

FIG. 6 is a schematic diagram of an embodiment of a network device according to an embodiment of the present invention;

FIG. 7 is a schematic diagram of an embodiment of a network device according to an embodiment of the present invention;

FIG. 8 is a schematic diagram of an embodiment of a signal processing method according to an embodiment of the present invention;

FIG. 9 is a schematic diagram of another embodiment of a signal processing method according to an embodiment of the present invention;

FIG. 10 is a schematic diagram of another embodiment of a signal processing method according to an embodiment of the present invention;

FIG. 11 is a schematic diagram of another embodiment of a signal processing method according to an embodiment of the present invention;

FIG. 12 is a schematic diagram of another embodiment of a signal processing method according to an embodiment of the present invention;

FIG. 13 is a schematic diagram of an embodiment of a network device according to an embodiment of the present invention; and

FIG. 14 is a schematic diagram of an embodiment of a network device according to an embodiment of the present invention.

## DESCRIPTION OF EMBODIMENTS

The embodiments of the present invention provide a method for generating a signal sequence, so as to number a transmission time interval TTI in a frame structure and generate a signal sequence by using a number of the TTI.

To make persons skilled in the art better understand the solutions in the embodiments of the present invention, the following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

In the specification, claims, and accompanying drawings of the present invention, the terms "first", "second", "third", "fourth", and so on (if existent) are intended to distinguish between similar objects but do not necessarily indicate a specific order or sequence. It should be understood that the data termed in such a way are interchangeable in proper circumstances so that the embodiments described herein can be implemented in other orders than the order illustrated or described herein. Moreover, the terms "include", "contain", and any other variants mean to cover the non-exclusive inclusion, for example, a process, method, system, product, or device that includes a list of steps or units is not necessarily limited to those units, but may include other units not expressly listed or inherent to such a process, method, product, or device.

A core concept of the embodiments of this application is that: A number of a TTI less than 1 millisecond or equal to 1 millisecond in the frame structure is determined, and a signal sequence of the TTI is generated based on the number of the TTI. This prevents interference between adjacent or neighboring TTIs or intersymbol interference (English: Inter symbol Interference, ISI for short) from being generated due to generation and use of a same signal sequence because for all short TTIs, a signal sequence is generated by using a corresponding subframe number or corresponding timeslot numbers.

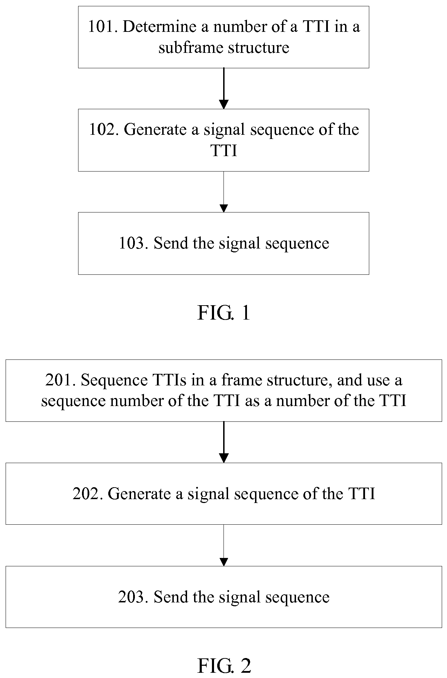

For ease of understanding, the following describes in detail a specific procedure in the embodiments of this application. Referring to FIG. 1, an embodiment of a method for generating a signal sequence according to the embodiments of this application includes the following steps.

101. Determine a number of a transmission time interval TTI in a frame structure, where the TTI includes a time length less than 1 millisecond.

In this embodiment of the present invention, when a length of the TTI is less than 1 millisecond, because the length of the TTI becomes shorter, a delay is correspondingly reduced, and resource utilization is improved in small-packet transmission. In this embodiment of the present invention, a length of one TTI may be 1 millisecond, may be 0.5 milliseconds, may be 0.6 milliseconds or 0.2 milliseconds, or even may be a length of several symbols. This is not limited herein. It should be noted that a TTI has only one length of 1 millisecond originally but may have a plurality of lengths currently. When a length of the TTI is less than 1 millisecond, the TTI may be referred to as a short TTI. In a radio frame/subframe, a short TTI with only one length may be included; a combination of a short TTI and a 1-millisecond TTI may be included; or a combination of short TTIs with a plurality of lengths may be included.

It should be noted that the TTI is a granularity for resource scheduling, and a radio frame/subframe/timeslot/symbol is a time scale of a radio resource. When a network device is to send data on a radio resource in unit of a TTI, there may be a correspondence between a TTI and a radio resource. In addition, the frame structure may include a radio frame, or may include a subframe. A length of one radio frame is 10 milliseconds, one radio frame includes 10 1-millisecond subframes, one subframe includes two timeslots, and one timeslot includes six or seven symbols. In other words, the radio frame may have 120 or 140 symbols, and the subframe may have 12 or 14 symbols. In this embodiment of the present invention, except as otherwise noted, that one timeslot includes seven symbols is used as an example for description. In other words, one subframe has 14 symbols, one radio frame has 140 symbols, and details are not described again. In addition, generally, the TTI does not span subframes. In other words, in one radio frame, symbols corresponding to one TTI exist only in one subframe. To be specific, symbols included in one TTI do not include a symbol of a subframe A and a symbol of a subframe B at the same time.

It should be noted that the time length that is less than 1 millisecond and that is included in the TTI may include at least two time lengths, the time lengths may be both/all less than 1 millisecond, or may include a time length less than 1 millisecond and further include a time length equal to 1 millisecond. This is not limited herein.

It should be noted that in this embodiment of the present invention, to avoid interference between adjacent or neighboring TTIs or intersymbol interference, each TTI in one radio frame may be independently numbered, or a TTI in only one subframe may be independently numbered, or even a TTI in only one timeslot may be independently numbered, provided that a generated signal sequence does not cause interference between the TTIs or intersymbol interference. This is not limited herein. In some feasible embodiments, first N consecutive TTIs may be independently numbered, for example, numbers 1 to N, and starting from an (N+1)th TTI, next N consecutive TTIs may be numbered again by using numbers 1 to N. A generated signal sequence does not cause intersymbol interference, provided that two TTIs with a same number are far enough away from each other. This is not limited herein. Generally, when two TTIs with a same number are farther away from each other, interference is less likely to occur. Preferably, all TTIs in one subframe or radio frame are independently numbered.

In some feasible embodiments, there is a plurality of scenarios specific to TTIs in one frame structure. It should be noted that the frame structure described herein may be a radio frame, or may be a subframe. This is not limited herein. The following describes different scenarios specific to the TTIs in the frame structure.

In Scenario 1, one radio frame may include TTIs with a plurality of lengths, and a subframe in the radio frame may include TTIs with a plurality of lengths. To be specific, one subframe may include TTIs with a plurality of lengths, for example, 0.2 milliseconds, 0.3 milliseconds, two symbols, and 0.5 milliseconds. In addition, lengths of TTIs in each subframe may be different. For example, in one subframe, there are 0.1 milliseconds, 0.3 milliseconds, 0.1 milliseconds, and several symbols. This is not limited herein.

In Scenario 2, one radio frame may include TTIs with a plurality of lengths, but a subframe in the radio frame includes TTIs with only one length. In other words, in 10 subframes of one radio frame, all TTIs in each subframe have a same length. If a length of the TTI is equal to two symbols, and the subframe has 14 symbols, numbers of the TTIs in the subframe may be 0 to 6; if a length of the TTI is equal to 0.3 milliseconds, and the subframe has 12 symbols, numbers of the TTIs in the subframe may be 0 to 3, provided that lengths of the TTIs in the subframe are equal. This is not limited herein. It should be noted that a length of a subframe can only be an integral multiple of a length of a symbol, and a length of a TTI is also an integer multiple of a length of a symbol. Therefore, in this scenario, the length of the subframe should be an integer multiple of the length of the equal-length TTI, as described in the foregoing example. If the length of the subframe is not an integral multiple of the length of the TTI, such a case is not applicable to this scenario. For example, in a 14-symbol subframe, there is a TTI with three symbols. Because 14 is not an integer multiple of 3, the 14-symbol subframe cannot be divided into several TTIs with an average length of three symbols. Therefore, the case can be classified as Scenario 1.

In Scenario 3, one radio frame includes TTIs with only one length, and the length of the TTI is a TTI less than 1 millisecond. To be specific, in one radio frame, TTIs with only one length may be included. For example, if the TTI has two symbols, in a 140-symbol radio frame, numbers of the TTIs may be 0 to 69; and if the TTI has three symbols, in a 120-symbol radio frame, numbers of the TTIs may be 0 to 39. It should be noted that the TTI generally does not span subframes, and therefore in one subframe, there is an integer quantity of TTIs. The TTI does not include a symbol of a subframe A and a symbol of a subframe B at the same time. In other words, if one radio frame includes TTIs with only one length, one subframe inevitably includes the TTIs with only one length, and the length of the subframe is inevitably an integer multiple of the length of the TTI. It should be noted that when the TTI is 1 millisecond, such a case is still applicable to the method proposed in the present invention. However, the prior art can already resolve this problem, and details are not described herein.

It should be noted that the TTIs in the frame structure are not limited to the foregoing three scenarios. In this embodiment of the present invention, the foregoing three scenarios are used as examples to describe the present invention.

In this embodiment of the present invention, it is only required that the TTIs in the frame structure be independently numbered to make different TTIs have different numbers, and a specific manner is not limited. The present invention provides four manners, and the manners are specifically described in step 201, steps 301 and 302, steps 401 and 402, and steps 501 and 502, respectively.

In this embodiment of the present invention, the number of the TTI in the frame structure may be determined by a base station, or may be determined by a terminal, provided that the base station or the terminal is a network device that can receive and send a signal. This is not limited herein.

102. Generate a signal sequence of the TTI based on the number of the TTI.

In this embodiment of the present invention, the signal sequence includes a scrambling sequence and a reference signal sequence. The scrambling sequence is used to scramble a physical channel. An LTE physical channel includes downlink physical channels: a PDCCH, a PDSCH, a PCFICH, a PHICH, a PMCH, and a PBCH, and uplink physical channels: a PUCCH, a PUSCH, and a PRACH. Except that a scrambling sequence of the PBCH is a fixed value (a cell ID) and that the PRACH (that is, a ZC sequence) does not need to be scrambled, the scrambling sequences of other channels are pseudo-random sequences generated by using a cell number, a temporary ID (RNTI) of UE, a timeslot number, or a subframe number.

LTE reference signals include a CRS, a DMRS, a PRS, a CSI-RS, an MBSFN RS, and the like, and are also pseudo-random sequences generated by using the cell number, the temporary ID (RNTI) of the UE, the timeslot number, or the subframe number.

In some feasible embodiments, the scrambling sequence is used to calculate a pseudo-random code sequence and encrypt a signal. While a reference signal is a known signal provided by a transmit end to a receive end for channel estimation or channel sounding.

In this embodiment of the present invention, in step 101, the number of TTI in the frame structure has been determined. An original number of a timeslot is set to $n_s$; and based on a cell number, a temporary ID (RNTI), and a TTI number that are used by a network device in LTE, scrambling sequences of the following different channels may be generated:

an initial value of a scrambling sequence of the PUSCH channel:

$$c_{\text{init}} = n_{\text{RNTI}} \cdot 2^{14} + q \cdot 2^{13} + \lfloor n_s/2 \rfloor \cdot 2^9 + N_{\text{ID}}^{\text{cell}},$$

an initial value of a scrambling sequence $c^{(q)}(i)$ of the PUCCH channel:

$$c_{\text{init}} = \left( \lfloor n_s/2 \rfloor + 1 \right) \cdot \left( 2N_{\text{ID}}^{\text{cell}} + 1 \right) \cdot 2^{16} + n_{\text{RNTI}},$$

an initial value of a scrambling sequence $c(i)$ of the PCFICH/PHICH channel:

$$c_{\text{init}} = \left( \lfloor n_s/2 \rfloor + 1 \right) \cdot \left( 2N_{\text{ID}}^{\text{cell}} + 1 \right) \cdot 2^9 + N_{\text{ID}}^{\text{cell}},$$

an initial value of a scrambling sequence $c(i)$ of the PDCCH channel:

$$c_{\text{init}} = \lfloor n_s/2 \rfloor 2^9 + N_{\text{ID}}^{\text{cell}}, \text{ and}$$

and

initial values of scrambling sequences $c^{(q)}(i)$ of the PDSCH channel and the PMCH channel:

$$c_{\text{init}} = \begin{cases} n_{\text{RNTI}} \cdot 2^{14} + q \cdot 2^{13} + \lfloor n_s/2 \rfloor \cdot 2^9 + N_{\text{ID}}^{\text{cell}} & \text{for PDSCH} \\ \lfloor n_s/2 \rfloor \cdot 2^9 + N_{\text{ID}}^{\text{MBSFN}} & \text{for PMCH} \end{cases};$$

and the following different reference signal sequences are generated:
an initial value of a pseudo-random sequence $c(i)$ used for the CRS sequence:

$$c_{\text{init}} = 2^{10} \cdot \left( 7 \cdot (n_s + 1) + l + 1 \right) \cdot \left( 2 \cdot N_{\text{ID}}^{\text{cell}} + 1 \right) + 2 \cdot N_{\text{ID}}^{\text{cell}} + N_{\text{CP}},$$

an initial value of a pseudo-random sequence $c(i)$ used for the MBSFN RS sequence:

$$c_{\text{init}} = 2^9 \cdot \left( 7 \cdot (n_s + 1) + l + 1 \right) \cdot \left( 2 \cdot N_{\text{ID}}^{\text{MBSFN}} + 1 \right) + N_{\text{ID}}^{\text{MBSFN}},$$

an initial value of a pseudo-random sequence $c(i)$ used for the DL DMRS sequence:

$$c_{\mathrm{init}} = \left(\lfloor n_{\mathrm{s}}/2 \rfloor + 1\right) \cdot \left(2 N_{\mathrm{ID}}^{\mathrm{cell}} + 1\right) \cdot 2^{16} + n_{\mathrm{RNTI}},$$

an initial value of a pseudo-random sequence *c(i)* used for the PRS sequence:

$$c_{\mathrm{init}} = 2^{10} \cdot \left(7 \cdot (n_{\mathrm{s}} + 1) + l + 1\right) \cdot \left(2 \cdot N_{\mathrm{ID}}^{\mathrm{cell}} + 1\right) + 2 \cdot N_{\mathrm{ID}}^{\mathrm{cell}} + N_{\mathrm{CP}},$$

and
an initial value of a pseudo-random sequence *c(i)* used for the CSI-RS sequence:

$$c_{\mathrm{init}} = 2^{10} \cdot \left(7 \cdot (n_{\mathrm{s}} + 1) + l + 1\right) \cdot \left(2 \cdot N_{\mathrm{ID}}^{\mathrm{CSI}} + 1\right) + 2 \cdot N_{\mathrm{ID}}^{\mathrm{CSI}} + N_{\mathrm{CP}}.$$

The foregoing formulas are used to obtain the initial values of the scrambling sequences or the reference signal sequences. The present invention does not exclude subsequent processing performed based on the initial values, such as performing cyclic shift and using an orthogonal cover code.

It should be noted that in this embodiment of the present invention, calculation is still performed based on the number of the TTI in the frame structure, and in an existing formula or an extended formula, a same quantity of bits occupied by a subframe number is retained. In this embodiment of the present invention, a number $n_{\mathrm{s}}$ obtained by using only a new numbering method is substituted into the formula, so as to obtain a new pseudo-random sequence or scrambling sequence. In addition to directly substituting $n_{\mathrm{s}}$ into the formula, there may be another different manner. In some feasible embodiments, the following eight schemes for the method for generating a signal sequence are summarized:

In Scheme 1, the existing formula remains unchanged, and the subframe number in the formula is simply replaced by a TTI number $n_{\mathrm{T}}$, so as to generate a scrambling sequence or a reference signal sequence.

In Scheme 2, the existing formula remains unchanged, and the subframe number in the formula is replaced by LSB(ns, 4), millisecond B(ns, 4), or (ns) mod 16, so as to generate a scrambling sequence or a reference signal sequence, where $n_{\mathrm{s}}$ is a TTI number, and 4 is a quantity of bits occupied by the subframe number in the formula.

In Scheme 3, in the extended formula, a quantity of bits occupied by the subframe number is retained. For example, the subframe number in the formula is replaced by ($n_{\mathrm{s}}$) mod (10*m) by using a different polynomial, so as to generate a scrambling sequence or a reference signal sequence, where $n_{\mathrm{s}}$ is a TTI number, m is a quantity of TTIs in one subframe, and log2(10*m) is a quantity of bits occupied by the subframe number in the formula.

In Scheme 4, when a two-level indexing scheme as described in steps 501 and 502 is used, the existing formula remains unchanged, a TTI number is calculated by using a two-level index: $n_{\mathrm{s}}$=a*m+b, and the subframe number $n_{\mathrm{s}}$ in the formula is replaced by $n_{\mathrm{s}}$, so as to generate a scrambling sequence or a reference signal sequence, where m is a quantity of TTIs in one subframe.

In Scheme 5, when a two-level indexing scheme as described in steps 501 and 502 is used, the existing formula remains unchanged, a subframe/timeslot number $n_{\mathrm{s}}$ in the formula is replaced by a first-level number or a second-level number of the TTI, so as to generate a scrambling sequence or a reference signal sequence.

In Scheme 6, when a two-level indexing scheme as described in steps 501 and 502 is used, the existing formula remains unchanged, and a subframe/timeslot number $n_{\mathrm{s}}$ in the formula is replaced by a TTI number $n_{\mathrm{T}}$, to be specific, to substitute a first-level number or a second-level number into a constant term of the formula, so as to generate a scrambling sequence or a reference signal sequence.

In Scheme 7, when a two-level indexing scheme as described in steps 501 and 502 is used, the existing formula remains unchanged, first few bits, for example, first two bits, of the subframe number in the formula are replaced by a first-level number (a) mod 4 of a TTI, and last few bits, for example, last two bits, of the subframe number in the formula are replaced by a second-level number (b) mod 4 of the TTI, so as to generate a scrambling sequence or a reference signal sequence.

In Scheme 8, when a two-level indexing scheme as described in steps 501 and 502 is used, the existing formula remains unchanged, first few bits, for example, first three bits, of the subframe number in the formula are replaced by a number ($n_{\mathrm{T}}$) mod 8 of a TTI, and last few bits, for example, last one digit, of the subframe number in the formula are replaced by a second-level number (b) mod 2 of the TTI, so as to generate a scrambling sequence or a reference signal sequence.

It should be noted that generation of the signal sequence by using the TTI number is not limited to the foregoing eight schemes, provided that a signal sequence that does not cause interference between the adjacent or neighboring TTIs or intersymbol interference can be generated. This is not limited herein.

103. Send the signal sequence or send information carrying the signal sequence.

In some feasible embodiments, optionally, after the signal sequence is determined, the determined signal sequence may be sent to a recipient network device. In this embodiment of the present invention, the signal sequence may be sent by a base station or a terminal, and the recipient network device may be a base station or a terminal, provided that the base station or the terminal is a network device that can receive and send a signal. This is not limited herein. In this embodiment of the present invention, a sender network device may send a signal to the recipient network device by using the channels described in step 102. The uplink channels include the PUCCH, the PUSCH, and the PRACH, and the downlink channels include the PDCCH, the PDSCH, the PCFICH, the PHICH, the PMCH, and the PBCH. Alternatively, a parallel channel that is neither an uplink channel nor a downlink channel may be included, for example, a sidelink channel PSCCH, PSSCH, PSDCH, or PSBCH between UEs, or a channel used by a Bluetooth device. This is not limited herein.

In other feasible embodiments, when receiving the signal sequence, the recipient network device may perform signal processing on the signal sequence.

The following provides description according to different methods for numbering TTIs in a frame structure. Referring to FIG. 2, FIG. 2 shows a first method for numbering TTIs in the present invention, and another embodiment of a method for generating a signal sequence according to the embodiments of the present invention includes the following steps.

201. Sequence TTIs in a frame structure, and use a sequence number of a TTI as a number of the TTI.

In some feasible embodiments, the TTIs in the frame structure may be directly sequenced one by one. A sequencing method may be performed starting from 0, and sequence numbers are sequenced in ascending order of natural numbers; or the sequencing method may be performed starting from 1. This is not limited herein. It should be noted that sequencing described herein means that sequencing is performed according to a specific rule, and each TTI has a corresponding sequence number. In the specific rule, a natural-number sequence number, an even-number sequence number, an odd-number sequence number, or a prime-number sequence number is included, provided that a manner agreed between a receiver and a sender is used. This is not limited herein. After a number corresponding to the TTI is obtained, the number is assigned to the TTI and is used as the number of the TTI. It should be noted that this method of directly sequencing TTIs may be applicable to the three scenarios described in step 101.

In some feasible embodiments, if there is a limited quantity of numbers specified in a protocol between a recipient network device and a sender network device, for example, there are only numbers 0 to 5, a numbering method may be performed in ascending order of natural numbers. First six TTIs are numbered by 0 to 5, a seventh TTI to a twelfth TTI are still numbered by 0 to 5, and so on, provided that symbols corresponding to TTIs with a same number are far enough away from each other and no interference is generated. This is not limited herein.

202. Generate a signal sequence of the TTI based on the number of the TTI.

203. Send the signal sequence or send information carrying the signal sequence.

In this embodiment, steps 202 and 203 are the same as steps 102 and 103 in the foregoing embodiment, and details are not described herein again.

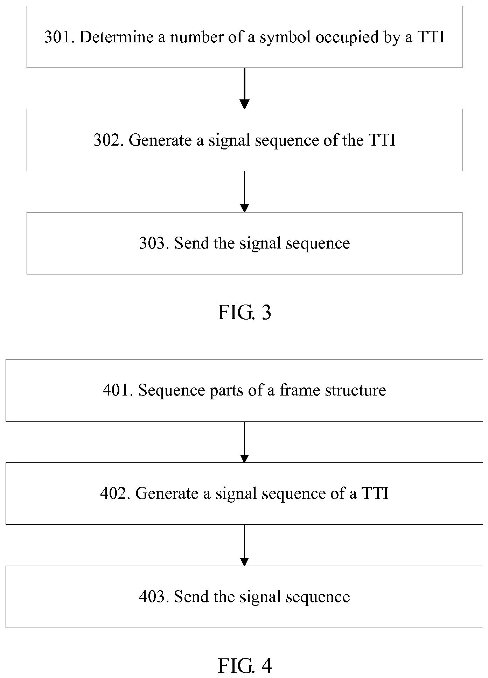

Referring to FIG. 3, FIG. 3 shows a second method for numbering TTIs in the present invention. Another embodiment of a method for generating a signal sequence according to the embodiments of the present invention includes the following steps.

301. Determine a number or numbers, in a frame structure, of one or more symbols occupied by a TTI, and use one of the number or numbers of the one or more symbols as a number of the TTI according to a preset rule.

A symbol in the frame structure has been pre-numbered, and each symbol has a definite symbol in the frame structure. In this embodiment of the present invention, symbols occupied by each TTI are first determined; and then numbers of these symbols are determined, and one of the numbers is selected as the number of the TTI. For example, one radio frame has 140 symbols, and numbers of the symbols of the radio frame are 0 to 139. If the TTI occupies 4 symbols, numbers of the occupied symbols may be 0 to 3.

In this embodiment of the present invention, after the numbers occupied by the TTI are determined, one number is selected as the number of the TTI according to the preset rule. In some feasible embodiments, the preset rule may be to select a largest or smallest number from numbers of a plurality of symbols or may be another rule, provided that the preset rule is a rule by which both a recipient network device and a sender network device abide. This is not limited herein. If numbers of symbols occupied by a first TTI is 0 to 3, and numbers of symbols occupied by a second TTI is 4 to 9, numbering is performed according to the preset rule. If the preset rule is to select the smallest number, the first TTI is numbered 0, and the second TTI is numbered 4. In contrast, if the preset rule is to select the largest number, the first TTI may be numbered 3, and the second TTI may be numbered 9.

It should be noted that this numbering method is also applicable to the three scenarios described in step 101.

302. Generate a signal sequence of the TTI based on the number of the TTI.

303. Send the signal sequence or send information carrying the signal sequence.

In this embodiment, steps 302 and 303 are the same as steps 102 and 103 in the foregoing embodiment, and details are not described herein again.

Referring to FIG. 4, FIG. 4 shows a third method for numbering TTIs in the present invention. Another embodiment of a method for generating a signal sequence according to the embodiments of the present invention includes the following steps.

401. Sequence parts of a frame structure, where a length of each part of the frame structure is a length of a shortest TTI in the frame structure, and the parts of the frame structure are divided in a time order; and use, according to a preset rule, one of a sequence number or sequence numbers of one or more parts occupied by the TTI as a number of the TTI.

In some feasible embodiments, different TTIs have different lengths in the frame structure. In this embodiment of the present invention, a TTI with a shortest length may be selected from the TTIs in the frame structure and may be used as a counting unit for dividing the frame structure in the time order. If one radio frame has 140 symbols, and a shortest TTI has two symbols, the radio frame may be divided into 70 parts in total with each having a length of two symbols, regardless of lengths of other TTIs. Each part includes two adjacent symbols, and every two parts are adjacent to each other.

In some feasible embodiments, if the frame structure is a subframe, and a shortest TTI has two symbols, the radio frame may be divided into seven parts in total with each having a length of two symbols, regardless of lengths of other TTIs. Each part includes two adjacent symbols, and every two parts are adjacent to each other.

It should be noted that in some feasible embodiments, if the frame structure is a radio frame, such a case is applicable to Scenario 1 and Scenario 2 described in the foregoing step 101. If the frame structure is a subframe, such a case may be applicable to only Scenario 1 described in the foregoing step 101.

In this embodiment of the present invention, after the parts of the frame structure are divided, the parts may be sequenced. A sequencing method is as described in step 101, and details are not described herein again.

In some feasible embodiments, the TTI in the frame structure occupies one or more parts, or may occupy a part of some parts. For example, the shortest TTI has two symbols, and the TTI occupies the second symbol of a part A and the first symbol of a part B that is after and adjacent to the part A. In this case, a number of the earlier-ranked part may be used as the number of the TTI according to the preset rule. In other feasible embodiments, the later-ranked part may alternatively be used as the number of the TTI, or another rule may be available, provided that the preset rule is a protocol by which both a recipient network device and a sender network device abide. This is not limited herein.

402. Generate a signal sequence of the TTI based on the number of the TTI.

403. Send the signal sequence or send information carrying the signal sequence.

In this embodiment, steps 402 and 403 are the same as steps 102 and 103 in the foregoing embodiment, and details are not described herein again.

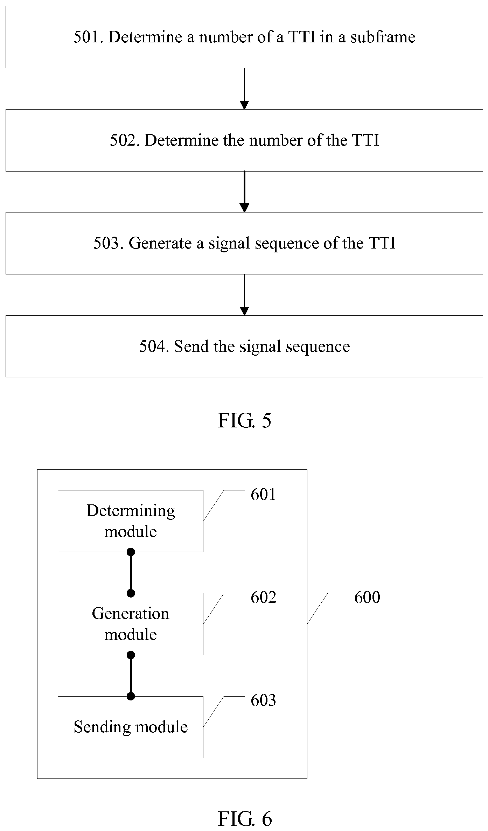

Referring to FIG. 5, FIG. 5 shows a fourth method for numbering TTIs in the present invention. Another embodiment of a method for generating a signal sequence according to the embodiments of the present invention includes the following steps.

501. Determine a number of a TTI in a subframe.

In some feasible embodiments, when a frame structure is specifically a radio frame, a two-level numbering method may alternatively be used to number the TTI in the frame structure, where a first-level number is a number of the subframe, and a second-level number is the number of the TTI in the subframe. In this embodiment of the present invention, a subframe corresponding to the TTI may be first determined, and then a number of the TTI in the subframe is determined. For a specific numbering method, refer to the methods described in step 101, step 201, steps 301 and 302, and steps 401 and 402. The determined number of the TTI in the subframe may be used as the second-level number.

502. Determine a number of the TTI in a radio frame, where the number of the TTI is formed by a number of the subframe in the radio frame and the number of the TTI in the subframe.

In this embodiment of the present invention, the first-level number is the subframe number corresponding to the TTI, and the number may be represented as a timeslot number. If one radio frame has 10 subframes, numbers of the 10 subframes may be 0 to 9. It should be noted that there is no sequential relationship between step 501 and step 502, to be specific, step 501 may be performed after step 502, or may be performed before step 502. This is not limited herein. After the first-level number and the second-level number of the TTI are determined, the number of the TTI may be formed by the first-level number and the second-level number. For example, if numbers of subframes in one radio frame are 0 to 9, a number of one subframe is 5, and a number of one TTI in the subframe is 1, a first-level number of the TTI is 5, a second-level number is 1, and the number of the TTI may be represented as 1-5 or 5-1, provided that the numbering method meets a rule that is agreed according to a protocol and that is determined by both a recipient network device and a sender network device. This is not limited herein.

503. Generate a signal sequence of the TTI based on the number of the TTI.

504. Send the signal sequence or send information carrying the signal sequence.

In this embodiment, steps 503 and 504 are the same as steps 102 and 103 in the foregoing embodiment, and details are not described herein again.

The foregoing describes the signal processing method in the embodiments of the present invention, and the following describes a network device in the embodiments of the present invention.

Referring to FIG. 6, an embodiment of the present invention further provides a network device 600, including a first determining module 601, a generation module 602, and a sending module 603.

The first determining module 601 is configured to determine a number of a transmission time interval TTI in a frame structure, where the TTI includes a time length less than 1 millisecond.

The first determining module 601 may be configured to sequence TTIs in the frame structure, and use a sequence number of the TTI as the number of the TTI; may be configured to determine a number or numbers, in the frame structure, of one or more symbols occupied by the TTI, and use one of the number or numbers of the one or more symbols as the number of the TTI according to a preset rule; may be configured to: sequence parts of the frame structure, where a length of each part of the frame structure is a length of a shortest TTI in the frame structure, and the parts of the frame structure are divided in a time order; and use, according to a preset rule, one of a sequence number or sequence numbers of one or more parts occupied by the TTI as the number of the TTI; or may be configured to determine a number of the TTI in a subframe, and determine a number of the TTI in a radio frame, where the number of the TTI is formed by a number of the subframe in the radio frame and the number of the TTI in the subframe.

The generation module 602 is configured to generate a signal sequence of the TTI based on the number of the TTI that is determined by the determining module.

The sending module 603 is configured to send the signal sequence or send information carrying the signal sequence.

It should be noted that although the network device includes the determining module and the generation module, persons skilled in the art can understand that functions of the foregoing two modules can be completed by a single module such as a processing module.

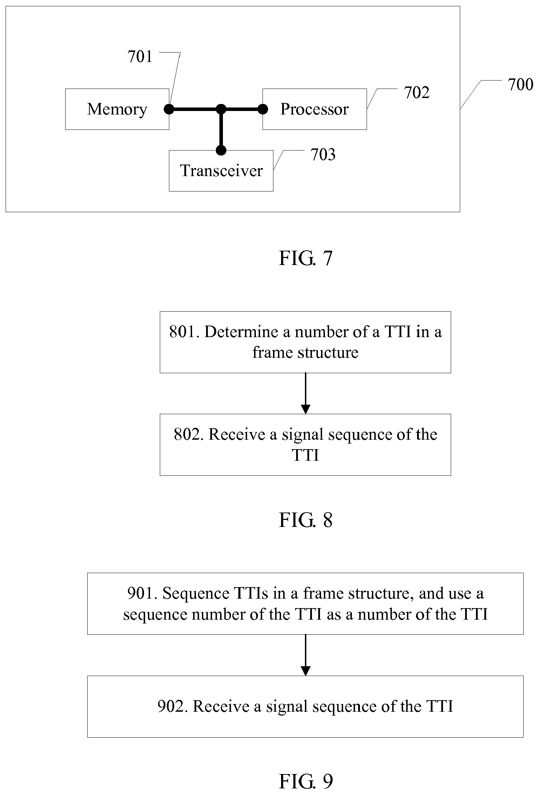

The foregoing describes the network device in the embodiments of the present invention from a perspective of a modular functional entity, and the following describes the network device in the embodiments of the present invention from a perspective of hardware processing. Referring to FIG. 7, an embodiment of the present invention provides a network device, configured to number a TTI in a frame structure and generate a signal sequence by using this number.

The network device 700 includes:

a transceiver 701, a memory 702, and a processor 703.

The transceiver 701, the memory 702, and the processor 703 are connected.

The transceiver 701 may include a transceiver (English: communication interface) between the processor 703 and a standard communications subsystem.

The transceiver 701 may further include a transceiver based on the EIA-RS-232C standard, to be specific, a transceiver of the serial binary data exchange interface technology standard between data terminal equipment (English: Data Terminal Equipment, DTE for short) and data circuit-terminating equipment (English: Data Circuit-terminating Equipment, DCE for short), or may include a transceiver based on the RS-485 protocol. This is not limited herein.

The memory 702 is configured to store a program, a number of a TTI that is determined by the processor, and a signal sequence of the TTI.

The memory 702 may include a volatile memory (English: volatile memory) such as a random-access memory (English: random-access memory, RAM for short); or the memory 702 may include a non-volatile memory (English: non-volatile memory) such as a flash memory (English: flash memory), a hard disk drive (English: hard disk drive, HDD for short), or a solid-state drive (English: solid-state drive, SSD for short); or the memory 703 may include a combination of the foregoing types of memories. This is not limited herein.

Optionally, the memory 702 may be further configured to store a program instruction. The processor 703 may call the program instruction stored in the memory 702 to perform one or more steps in the embodiment shown in FIG. 2 or an optional implementation thereof, so that the positioning server 700 implements the functions in the foregoing methods.

The processor 703 is configured to: determine the number of the transmission time interval TTI in the frame structure, where the TTI includes a time length less than 1 millisecond; and generate a signal sequence of the TTI based on the number of the TTI.

The processor 703 may be a central processing unit (English: central processing unit, CPU for short), a network processor (English: network processor, NP for short), or a combination of the CPU and the NP.

The processor 703 may further include a hardware chip. The foregoing hardware chip may be an application-specific integrated circuit (English: application-specific integrated circuit, ASIC for short), a programmable logic device (English: programmable logic device, PLD for short), or a combination thereof. The foregoing PLD may be a complex programmable logic device (English: complex programmable logic device, CPLD for short), a field-programmable logic gate array (English: field-programmable gate array, FPGA for short), a generic array logic (English: generic array logic, GAL for short), or any combination thereof.

Referring to FIG. 8, an embodiment of a method for generating a signal sequence according to the embodiments of this application includes the following steps.

801. Determine a number of a transmission time interval TTI in a frame structure, where the TTI includes a time length less than 1 millisecond.

In this embodiment, step 801 is the same as step 101 in the foregoing embodiment, and details are not described herein again.

802. Receive a signal sequence of the TTI based on the number of the TTI.

In this embodiment of the present invention, after the TTI is numbered, the signal sequence is received on a radio resource corresponding to the number of the TTI. Obtaining the signal sequence of the TTI based on the number of the TTI is a common general knowledge, and details are not described herein again.

Referring to FIG. 9, an embodiment of a method for generating a signal sequence according to the embodiments of this application includes the following steps.

901. Sequence TTIs in a frame structure, and use a sequence number of the TTI as a number of the TTI.

In this embodiment, step 901 is the same as step 201 in the foregoing embodiment, and details are not described herein again.

902. Receive a signal sequence of the TTI based on the number of the TTI.

In this embodiment, step 902 is the same as step 802 in the foregoing embodiment, and details are not described herein again.

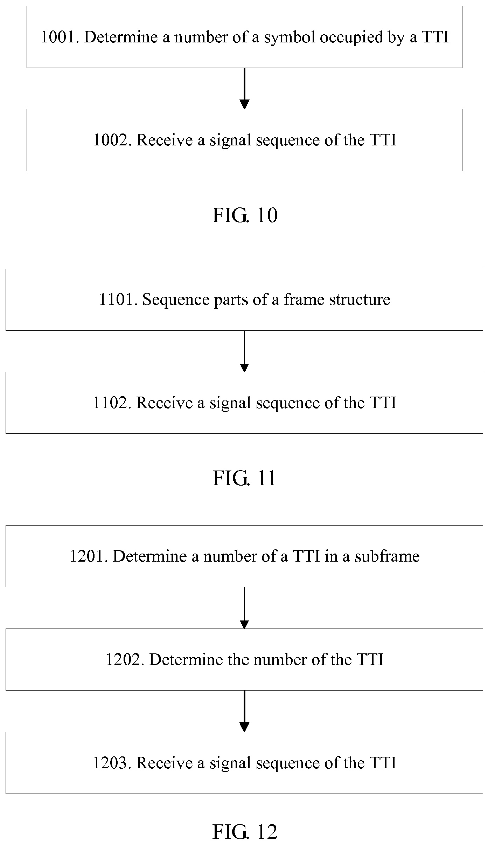

Referring to FIG. 10, FIG. 10 shows a second method for numbering TTIs in the present invention. Another embodiment of a method for generating a signal sequence according to the embodiments of the present invention includes the following steps.

1001. Determine a number or numbers, in a frame structure, of one or more symbols occupied by a TTI, and use one of the number or numbers of the one or more symbols as a number of a TTI according to a preset rule.

In this embodiment, step 1001 is the same as step 301 in the foregoing embodiment, and details are not described herein again.

1002. Receive a signal sequence of the TTI based on the number of the TTI.

In this embodiment, step 1002 is the same as step 802 in the foregoing embodiment, and details are not described herein again.

Referring to FIG. 11, FIG. 11 shows a third method for numbering TTIs in the present invention. Another embodiment of a method for generating a signal sequence according to the embodiments of the present invention includes the following steps.

1101. Sequence parts of a frame structure, where a length of each part of the frame structure is a length of a shortest TTI in the frame structure, and the parts of the frame structure are divided in a time order; and use, according to a preset rule, one of a sequence number or sequence numbers of one or more parts occupied by the TTI as a number of the TTI.

In this embodiment, step 1001 is the same as step 401 in the foregoing embodiment, and details are not described herein again.

1102. Receive a signal sequence of the TTI based on the number of the TTI.

In this embodiment, step 1102 is the same as step 802 in the foregoing embodiment, and details are not described herein again.

Referring to FIG. 12, FIG. 12 shows a fourth method for numbering TTIs in the present invention. Another embodiment of a method for generating a signal sequence according to the embodiments of the present invention includes the following steps.

1201. Determine a number of a TTI in a subframe.

In this embodiment, step 1201 is the same as step 501 in the foregoing embodiment, and details are not described herein again.

1202. Determine a number of the TTI in a radio frame, where the number of the TTI is formed by a number of the subframe in the radio frame and the number of the TTI in the subframe.

In this embodiment, step 1202 is the same as step 502 in the foregoing embodiment, and details are not described herein again.

1203. Receive a signal sequence of the TTI based on the number of the TTI.

In this embodiment, step 1202 is the same as step 802 in the foregoing embodiment, and details are not described herein again.

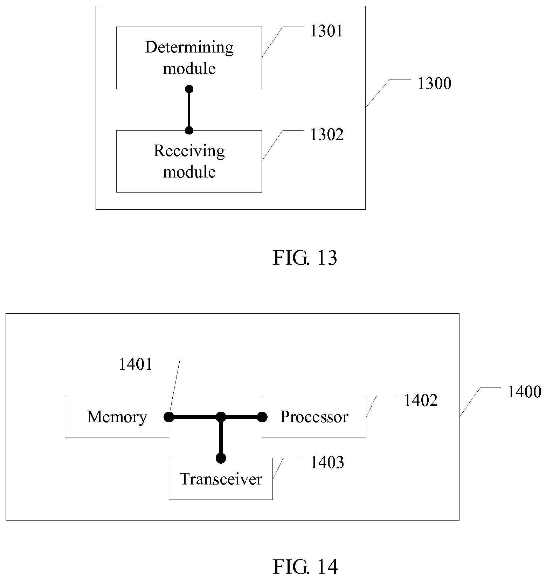

Referring to FIG. 13, an embodiment of a network device 1300 according to the embodiments of the present invention includes a determining module 1301 and a receiving module 1302.

The determining module 1301 is configured to determine a number of a transmission time interval TTI in a frame structure, where the TTI includes a time length less than 1 millisecond.

The receiving module 1302 is configured to receive a signal sequence of the TTI based on the number of the TTI that is determined by the determining module 1301.

Referring to FIG. 14, an embodiment of a network device 1400 according to the embodiments of the present invention includes:

the network device 1400 includes:

a transceiver 1401, a memory 1402, and a processor 1403.

The transceiver 1401, the memory 1402, and the processor 1403 are connected.

The transceiver 1401 is configured to receive a signal sequence of a TTI based on a number of the TTI that is determined by a second determining module 901.

The transceiver 1401 may include a transceiver (English: communication interface) between the processor 1403 and a standard communications subsystem.

The transceiver 1401 may further include a transceiver based on the EIA-RS-232C standard, to be specific, a transceiver of the serial binary data exchange interface technology standard between data terminal equipment (English: Data Terminal Equipment, DTE for short) and data circuit-terminating equipment (English: Data Circuit-terminating Equipment, DCE for short), or may include a transceiver based on the RS-485 protocol. This is not limited herein.

The memory 1402 is configured to store a program, the number of the TTI that is determined by the processor, and a signal sequence of the TTI.

The memory 1402 may include a volatile memory (English: volatile memory) such as a random-access memory (English: random-access memory, RAM for short); or the memory 1402 may include a non-volatile memory (English: non-volatile memory) such as a flash memory (English: flash memory), a hard disk drive (English: hard disk drive, HDD for short), or a solid-state drive (English: solid-state drive, SSD for short); or the memory 1403 may include a combination of the foregoing types of memories. This is not limited herein.

Optionally, the memory 1402 may be further configured to store a program instruction. The processor 1403 may call the program instruction stored in the memory 1402 to perform one or more steps in the embodiment shown in FIG. 2 or an optional implementation thereof, so that the positioning server 1400 implements the functions in the foregoing methods.

The processor 1403 is configured to determine the number of the transmission time interval TTI in a frame structure, where the TTI includes a time length less than 1 millisecond.

The processor 1403 may be a central processing unit (English: central processing unit, CPU for short), a network processor (English: network processor, NP for short), or a combination of the CPU and the NP.

The processor 1403 may further include a hardware chip. The foregoing hardware chip may be an application-specific integrated circuit (English: application-specific integrated circuit, ASIC for short), a programmable logic device (English: programmable logic device, PLD for short), or a combination thereof. The foregoing PLD may be a complex programmable logic device (English: complex programmable logic device, CPLD for short), a field-programmable logic gate array (English: field-programmable gate array, FPGA for short), a generic array logic (English: generic array logic, GAL for short), or any combination thereof.

It may be clearly understood by persons skilled in the art that, for convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of the present invention. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

**Claims**

1. A signal processing method, comprising:

   determining a number of a transmission time interval TTI in a frame structure, wherein the TTI comprises a time length less than 1 millisecond; and
   generating a signal sequence of the TTI based on the number of the TTI.

2. The method according to claim 1, wherein the time length that is less than 1 millisecond and that is comprised in the TTI comprises at least two time lengths, and each of the at least two time lengths is less than 1 millisecond.

3. The method according to claim 1 or 2, wherein the TTI comprises the time length less than 1 millisecond, and also comprises a time length equal to 1 millisecond.

4. The method according to claims 1 to 3, wherein the determining a number of a TTI in a frame structure comprises:

   sequencing TTIs in the frame structure, and using a sequence number of the TTI as the number of the TTI.

5. The method according to claims 1 to 3, wherein the determining a number of a TTI in a frame structure comprises:

   determining a number or numbers, in the frame structure, of one or more symbols occupied by the TTI, and using one of the number or numbers of the one or more symbols as the number of the TTI according to a preset rule.

6. The method according to claims 1 to 3, wherein the determining a number of a TTI in a frame structure comprises:

   sequencing parts of the frame structure, wherein a length of each part of the frame structure is a length of a shortest TTI in the frame structure, and the parts of the frame structure are divided in a time order; and using, according to a preset rule, one of a sequence number or sequence numbers of one or more parts occupied by the TTI as the number of the TTI.

7. The method according to any one of claims 1 to 6, wherein the frame structure comprises a radio frame and a subframe.

8. The method according to claim 7, wherein the determining a number of a TTI in a frame structure comprises:

   determining a number of the TTI in a subframe; and
   determining a number of the TTI in a radio frame, wherein the number of the TTI is formed by a number of the subframe in the radio frame and the number of the TTI in the subframe.

9. The method according to claim 1, wherein the signal sequence comprises a scrambling sequence and a reference signal sequence.

10. The method according to claim 1, wherein the method further comprises:

   sending the signal sequence or sending information carrying the signal sequence.

**11.** A network device for signal processing, comprising:

a determining module, configured to determine a number of a TTI in a frame structure, wherein the TTI comprises a time length less than 1 millisecond; and

a generation module, configured to generate a signal sequence of the TTI based on the number of the TTI that is determined by the determining module.

**12.** The network device according to claim 11, wherein that a determining module is configured to determine a number of a transmission time interval TTI in a frame structure comprises:

configured to sequence TTIs in the frame structure, and use a sequence number of the TTI as the number of the TTI.

**13.** The network device according to claim 11 or 12, wherein that a determining module is configured to determine a number of a transmission time interval TTI in a frame structure comprises:

the determining module is configured to determine a number or numbers, in the frame structure, of one or more symbols occupied by the TTI, and use one of the number or numbers of the one or more symbols as the number of the TTI according to a preset rule.

**14.** The network device according to claim 11, wherein that a determining module is configured to determine a number of a transmission time interval TTI in a frame structure comprises:

the determining module is configured to: sequence parts of the frame structure, wherein a length of each part of the frame structure is a length of a shortest TTI in the frame structure, and the parts of the frame structure are divided in a time order; and use, according to a preset rule, one of a sequence number or sequence numbers of one or more parts occupied by the TTI as the number of the TTI.

**15.** The network device according to claim 11, wherein that a determining module is configured to determine a number of a transmission time interval TTI in a frame structure comprises:

the determining module is configured to determine a number of the TTI in a subframe; and

determine a number of the TTI in a radio frame, wherein the number of the TTI is formed by a number of the subframe in the radio frame and the number of the TTI in the subframe.

**16.** The network device according to claims 11 to 15, further comprising:

a sending module, configured to send the signal sequence or send information carrying the signal sequence.

**17.** A network device, comprising:

a memory and a processor, wherein
the memory is connected to the processor;
the processor is configured to: determine a number of a transmission time interval TTI in a frame structure, wherein the TTI comprises a time length less than 1 millisecond; and generate a signal sequence of the TTI based on the number of the TTI; and
the memory is configured to store a program, the number of the TTI that is determined by the processor, and the signal sequence of the TTI.

**18.** A signal processing method, comprising:

determining a number of a transmission time interval TTI in a frame structure, wherein the TTI comprises a time length less than 1 millisecond; and
receiving a signal sequence of the TTI based on the number of the TTI.

**19.** The method according to claim 18, wherein the time length that is less than 1 millisecond and that is comprised in the TTI comprises at least two time lengths, and each of the at least two time lengths is less than 1 millisecond.

**20.** The method according to claim 18 or 19, wherein the TTI comprises the time length less than 1 millisecond, and also comprises a time length equal to 1 millisecond.

**21.** The method according to any one of claims 18 to 20, wherein the determining a number of a TTI in a frame structure comprises:

> sequencing TTIs in the frame structure, and using a sequence number of the TTI as the number of the TTI.

**22.** The method according to any one of claims 18 to 20, wherein the determining a number of a TTI in a frame structure comprises:

> determining a number or numbers, in the frame structure, of one or more symbols occupied by the TTI, and using one of the number or numbers of the one or more symbols as the number of the TTI according to a preset rule.

**23.** The method according to any one of claims 18 to 20, wherein the determining a number of a TTI in a frame structure comprises:

> sequencing parts of the frame structure, wherein a length of each part of the frame structure is a length of a shortest TTI in the frame structure, and the parts of the frame structure are divided in a time order; and using, according to a preset rule, one of a sequence number or sequence numbers of one or more parts occupied by the TTI as the number of the TTI.

**24.** The method according to any one of claims 18 to 23, wherein the frame structure comprises a radio frame and a subframe.

**25.** The method according to claim 24, wherein the determining a number of a TTI in a frame structure comprises:

> determining a number of the TTI in a subframe; and
> determining a number of the TTI in a radio frame, wherein the number of the TTI is formed by a number of the subframe in the radio frame and the number of the TTI in the subframe.

**26.** The method according to claim 18, wherein the signal sequence comprises a scrambling sequence and a reference signal sequence.

**27.** A network device, comprising:

> a determining module, configured to determine a number of a transmission time interval TTI in a frame structure, wherein the TTI is less than 1 millisecond and/or is equal to 1 millisecond; and
> a receiving module, configured to receive a signal sequence of the TTI based on the number of the TTI that is determined by the determining module.

**28.** The network device according to claim 27, wherein that a determining module is configured to determine a number of a transmission time interval TTI in a frame structure comprises:

> the determining module is configured to sequence TTIs in the frame structure, and use a sequence number of the TTI as the number of the TTI.

**29.** The network device according to claim 27, wherein that a determining module is configured to determine a number of a transmission time interval TTI in a frame structure comprises:

> the determining module is configured to determine a number or numbers, in the frame structure, of one or more symbols occupied by the TTI, and use one of the number or numbers of the one or more symbols as the number of the TTI according to a preset rule.

**30.** The network device according to claim 27, wherein that a determining module is configured to determine a number of a transmission time interval TTI in a frame structure comprises:

the determining module is configured to: sequence parts of the frame structure, wherein a length of each part of the frame structure is a length of a shortest TTI in the frame structure, and the parts of the frame structure are divided in a time order; and use, according to a preset rule, one of a sequence number or sequence numbers of one or more parts occupied by the TTI as the number of the TTI.

31. The network device according to claim 27, wherein that a determining module is configured to determine a number of a transmission time interval TTI in a frame structure comprises:

the determining module is configured to determine a number of the TTI in a subframe; and
determine a number of the TTI in a radio frame, wherein the number of the TTI is formed by a number of the subframe in the radio frame and the number of the TTI in the subframe.

32. A network device, comprising:

a memory and a processor, wherein
the memory is connected to the processor;
the processor is configured to: determine a number of a transmission time interval TTI in a frame structure, wherein the TTI is less than 1 millisecond and/or is equal to 1 millisecond; and receive a signal sequence of the TTI based on the number of the TTI; and
the memory is configured to store a program, the number of the TTI that is determined by the processor, and the signal sequence of the TTI.

101. Determine a number of a TTI in a
subframe structure

102. Generate a signal sequence of the
TTI

103. Send the signal sequence

FIG. 1

201. Sequence TTIs in a frame structure, and use a
sequence number of the TTI as a number of the TTI

202. Generate a signal sequence of the TTI

203. Send the signal sequence

FIG. 2

301. Determine a number of a symbol occupied by a TTI

302. Generate a signal sequence of the TTI

303. Send the signal sequence

FIG. 3

401. Sequence parts of a frame structure

402. Generate a signal sequence of a TTI

403. Send the signal sequence

FIG. 4

501. Determine a number of a TTI in a subframe

502. Determine the number of the TTI

503. Generate a signal sequence of the TTI

504. Send the signal sequence

FIG. 5

Determining module — 601

Generation module — 602

— 600

Sending module — 603

FIG. 6

701

Memory

702

Processor

700

703

Transceiver

**FIG. 7**

801. Determine a number of a TTI in a frame structure

802. Receive a signal sequence of the TTI

**FIG. 8**

901. Sequence TTIs in a frame structure, and use a sequence number of the TTI as a number of the TTI

902. Receive a signal sequence of the TTI

**FIG. 9**

1001. Determine a number of a symbol occupied by a TTI

1002. Receive a signal sequence of the TTI

FIG. 10

1101. Sequence parts of a frame structure

1102. Receive a signal sequence of the TTI

FIG. 11

1201. Determine a number of a TTI in a subframe

1202. Determine the number of the TTI

1203. Receive a signal sequence of the TTI

FIG. 12

Determining
module ———— 1301

———— 1300

Receiving
module ———— 1302

FIG. 13

1401

Memory     Processor ———— 1402    ———— 1400

Transceiver ———— 1403

FIG. 14

# INTERNATIONAL SEARCH REPORT

| International application No. |
|---|
| PCT/CN2016/078045 |

## A. CLASSIFICATION OF SUBJECT MATTER

H04W 72/12 (2009.01) i

According to International Patent Classification (IPC) or to both national classification and IPC

## B. FIELDS SEARCHED

Minimum documentation searched (classification system followed by classification symbols)

H04W H04L H04B

Documentation searched other than minimum documentation to the extent that such documents are included in the fields searched

Electronic data base consulted during the international search (name of data base and, where practicable, search terms used)

CNABS, CNTXT, CNKI, VEN, USTXT, EPTXT, WOTXT: TTI, sequence number, signal sequence, short TTI, interference, symbol, subframe, short, 1ms, number, duration, sequence, ISI

## C. DOCUMENTS CONSIDERED TO BE RELEVANT

| Category* | Citation of document, with indication, where appropriate, of the relevant passages | Relevant to claim No. |
|---|---|---|
| Y | CN 102045848 A (TD TECH LTD.), 04 May 2011 (04.05.2011), description, paragraphs 0061-0074 and 0206 | 1-4, 7, 9-12, 16-21, 24, 26-28, 32 |
| Y | WO 2015179146 A1 (QUALCOMM INC.), 26 November 2015 (26.11.2015), description, paragraphs 0059 and 0062 | 1-4, 7, 9-12, 16-21, 24, 26-28, 32 |
| A | CN 104272690 A (SAMSUNG ELECTRONICS CO., LTD.), 07 January 2015 (07.01.2015), the whole description | 1-32 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 November 2016 (07.11.2016) | 03 January 2017 (03.01.2017) |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>LING, Lin<br><br>Telephone No.: (86-10) 62411446 |

Form PCT/ISA/210 (second sheet) (July 2009)

## INTERNATIONAL SEARCH REPORT
### Information on patent family members

International application No.

**PCT/CN2016/078045**

| Patent Documents referred in the Report | Publication Date | Patent Family | Publication Date |
|---|---|---|---|
| CN 102045848 A | 04 May 2011 | CN 102045848 B | 28 November 2012 |
| WO 2015179146 A1 | 26 November 2015 | WO 2015179145 A1 | 26 November 2015 |
| | | WO 2015179144 A1 | 26 November 2015 |
| | | US 2015333898 A1 | 19 November 2015 |
| CN 104272690 A | 07 January 2015 | WO 2013133656 A1 | 12 September 2013 |
| | | EP 2637347 A2 | 11 September 2013 |
| | | KR 20140143754 A | 17 December 2014 |
| | | US 2013235853 A1 | 12 September 2013 |
| | | EP 2637347 A3 | 18 September 2013 |

Form PCT/ISA/210 (patent family annex) (July 2009)